**Europäisches Patentamt**

**European Patent Office**

**Office européen des brevets**

(19)

(11) Veröffentlichungsnummer : **0 147 412 B1**

(12) **EUROPÄISCHE PATENTSCHRIFT**

(45) Veröffentlichungstag der Patentschrift :
29.07.87

(51) Int. Cl.⁴ : **B 23 D 79/00**

(21) Anmeldenummer : **84901744.7**

(22) Anmeldetag : **27.04.84**

(86) Internationale Anmeldenummer :
**PCT/DE 84/00096**

(87) Internationale Veröffentlichungsnummer :
**WO/8404715 (06.12.84 Gazette 84/28)**

(54) ANLAGE ZUR BEHANDLUNG VON WERKSTÜCKEN MIT EINEM EXPLOSIVEN GASGEMISCH, INSBESONDERE THERMISCHE ENTGRATANLAGE.

(30) Priorität : **20.05.83 DE 3318426**

(43) Veröffentlichungstag der Anmeldung :
**10.07.85 Patentblatt 85/28**

(45) Bekanntmachung des Hinweises auf die Patenterteilung : **29.07.87 Patentblatt 87/31**

(84) Benannte Vertragsstaaten :
**DE FR GB**

(56) Entgegenhaltungen :
**GB-A- 1 353 032**
**US-A- 4 025 062**

(73) Patentinhaber : **ROBERT BOSCH GMBH**
**Robert-Bosch-Platz 1**
**D-7016 Gerlingen-Schillerhöhe (DE)**

(72) Erfinder : **CONRAD, Hans-Jürgen**
**Lessingstr. 25**
**D-7255 Rutesheim (DE)**
Erfinder : **PFEIFFER, Eberhard**
**Holunderweg 21**
**D-7410 Reutlingen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einer Anlage nach der Gattung des Hauptanspruchs. Bei den besonders in Bezug genommenen Anlagen zum thermischen Entgraten von Werkstücken erfolgt ein ungezielter Abtrag, bei dem das gesamte Werkstück einem Hitzeschock ausgesetzt wird. Bevorzugt abgetragen werden Ecken und Kanten, da diese Stellen bei großer Oberfläche und kleinem Volumen besonders viel Wärme aufnehmen und somit oxidiert bzw. verbrannt werden. Der Hitzeschock wird durch das Abbrennen eines Brenngas-Sauerstoff-Gemisches erzeugt, wobei Wasserstoff oder Erdgas bzw. Methan als Brenngas verwendet werden. Die Gaskomponenten werden vom Vorrat in je einen Dosierzylinder eingelassen und mittels einer Druckvorrichtung unter erheblicher Komprimierung über Ventile in die Werkstück-Bearbeitungskammer gepumpt, wobei ihre Vermischung entweder in einer separaten Mischkammer oder in der Bearbeitungskammer selbst stattfindet. Die Kompression der Gaskomponenten ist dabei gleich groß und entspricht gegen Ende der Füllung in der Werkstück-Bearbeitungskammer dem Druck, der dort für den jeweils optimalen Brennvorgang erforderlich ist. Je höher das Brenngas-Sauerstoff-Gemisch komprimiert worden ist, umso größer ist die Energie und umso stärker die Entgratwirkung. Die Verbrennungstemperatur des Gases liegt im Bereich von 2500 bis 3500° C. Mit der Erhöhung des Druckes steigt die pro Volumeneinheit freigesetzte Wärmemenge. Die in der Werkstück-Bearbeitungskammer auftretenden Drücke des Brenngas-Sauerstoff-Gemisches liegen bei 40 bar bei Füllung der Kammer. Kurz nach dem Zünden tritt aufgrund der Explosion in der Kammer ein Druck in der Größenordnung von ca. 700 bar auf. Dieser kurzfristig sehr hohe Druck belastet die an die Werkstück-Bearbeitungskammer angeschlossenen Bauteile der Mischkammer.

Bei einer bekannten Anlage nach der US-A-4 025 062 ist die Mischkammer als Bauteil an die Werkstück-Bearbeitungskammer angeflanscht und enthält u. a. die zur Zündung des Gasgemisches notwendige Zündkerze. Beim Zünden des Gasgemisches schreitet die Explosionsfront ausgehend vom Bereich der Zündkerze in Richtung Werkstück-Bearbeitungskammer fort. Durch den hohen Explosionsdruck und die hohen Verbrennungstemperaturen in der Werkstück-Bearbeitungskammer wird auch die unmittelbar an diese Kammer· angeschlossene Mischkammer sehr hohen Belastungen ausgesetzt. Um eine rasche Verunreinigung der Zündkerze zu vermeiden, ist die zwischen der Werkstück-Bearbeitungskammer und der Gas-Mischkammer angeordnete Zuleitung für das Gasgemisch als Leitungslabyrinth mit mehreren, rechtwinkelig zueinander angeordneten Leitungsabschnitten ·ausgebildet. Dadurch können die beim Entgraten von Werkstücken auftretenden Verunreinigungen in der Werkstück-Bearbeitungskammer durch die Verbrennungsdruckwelle nicht in die Mischkammer gelangen, sondern fangen sich in dem als Gasstaustufe wirkenden Leitungssystem.

Bei der bekannten Anlage sind die Werkstück-Bearbeitungskammer und die Gas-Mischkammer mit Gasstaustufe als separate, aneinander geflanschte Blöcke ausgebildet. Die Material- und Herstellungskosten dieser Blöcke sind beträchtlich, so daß der Anschaffungspreis einer solchen Anlage relativ hoch ist.

Durch die GB-A-1 353 032 ist eine Anlage zur Behandlung von Werkstücken mit einem explosiven Gasgemisch, insbesondere eine thermische Entgratanlage, bekannt, bei welcher die Zuleitungen für die Gaskomponenten unmittelbar in die Werkstück-Bearbeitungskammer münden. An einer Seitenwand der Bearbeitungskammer ist ein Zündkerzenblock befestigt, der einen die Kammerseitenwand durchdringenden Zündkanal aufweist. Der Zündkanal verläuft geradlinig und vermag daher die Zündkerze nicht wirksam gegen Verbrennungsrückstände zu schützen.

### Vorteile der Erfindung

Die erfindungsgemäße Anlage mit den kennzeichnenden Merkmalen des Hauptanspruchs hat demgegenüber den Vorteil, daß die Gasstaustufe in die zugleich als Gas-Mischkammer dienende Werkstück-Bearbeitungskammer integriert ist. Anstelle zweier separater Blöcke benötigt die vorgeschlagene Anlage zur Erzielung der gleichen Wirkungen somit nur noch einen einzigen Block. Sie läßt sich daher erheblich kostengünstiger herstellen und benötigt aufgrund ihrer kompakten Bauweise wesentlich weniger Stellraum als die vorstehend beschriebenen bekannten Anlagen. Außerdem ermöglicht die vorgeschlagene Anlage kurze Taktzeiten bei der Werkstückbearbeitung, da die bereits in der Werkstück-Bearbeitungskammer fertig gemischten Gaskomponenten über die Bohrungen der Gasstaustufe in die Zündbohrung eindringen. Die Wege zwischen Zündvorrichtung und Werkstück-Bearbeitungskammer sind relativ kurz, was sich auf den Ablauf des Zündvorgangs positiv auswirkt. Zur Optimierung des Zündvorgangs trägt auch bei, daß die von der Zündvorrichtung ausgehende Flammfront vor ihrem Eintritt in den Brennraum durch die Bohrungen der Gasstaustufe in mehrere Flammstrahlen aufgespalten wird, die an verschiedenen Stellen in den Brennraum eintreten und ein relativ großes Gemischvolumen gleichzeitig entzünden.

Durch die in den Unteransprüchen aufgeführten Maßnahmen sind vorteilhafte Weiterbildungen und Verbesserungen der im Hauptanspruch angegebenen Anlage möglich. Besonders vorteilhaft ist es, die Gaszuleitungsbohrungen und die Bohrungen der Gasstaustufe als Sacklochbohrungen auszuführen.

## Zeichnung

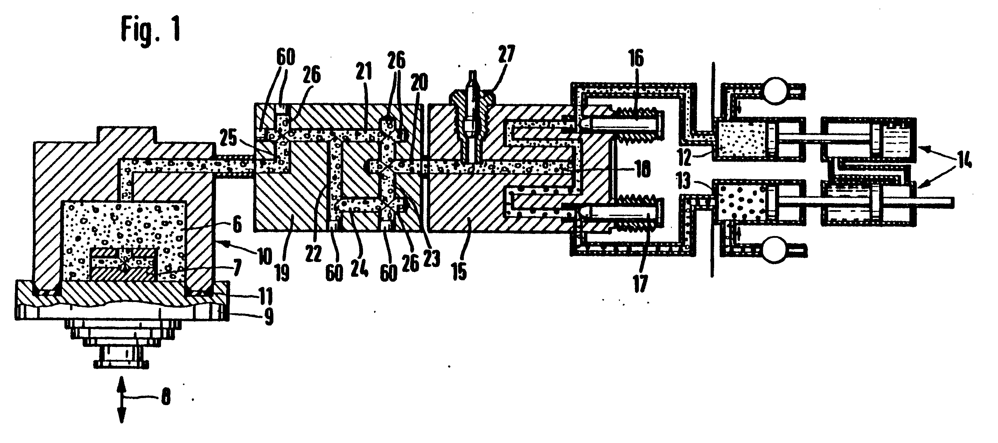

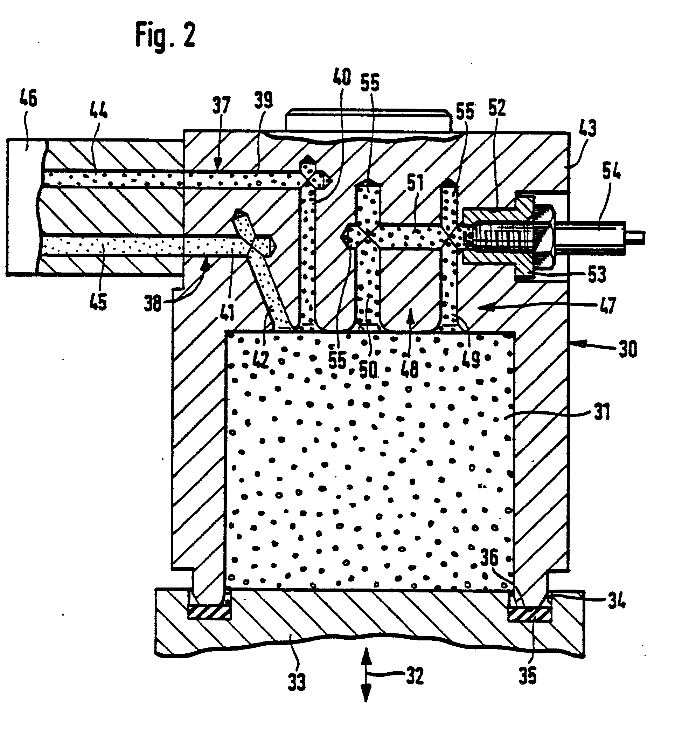

Weitere Merkmale ergeben sich aus der nachfolgenden Beschreibung anhand eines in der Zeichnung dargestellten Ausführungsbeispiels der Erfindung. Es zeigen Figur 1 eine schematische Darstellung einer bekannten Anlage zum thermischen Entgraten von Werkstücken, Figur 2 die wesentlichen Teile einer erfindungsgemäß ausgebildeten Entgratanlage in einem Längsschnitt.

## Beschreibung der Erfindung

In Figur 1 ist mit 6 eine Bearbeitungskammer bezeichnet, in der sich das zu entgratende Werkstück 7 befindet. Das Werkstück ruht hierbei auf einem in Richtung des Doppelpfeils 8 bewegbaren Teller 9, welcher vor Auslösung des Entgratvorgangs an die Stirnfläche eines die Kammer 6 enthaltenden zylindrischen Blocks 10 angelegt wird. Zwischen Teller 10 und Stirnfläche ist eine Dichtung 11 angeordnet.

Die Gaskomponenten des Brenngas-Sauerstoff-Gemisches werden durch einen Dosierzylinder 12 für Brenngas sowie einen Dosierzylinder 13 für Sauerstoff mittels einer Gaseinstoßvorrichtung 14 in die Mischkammer 15 eingebracht. Die Ventile 16 und 17 für Brenngas bzw. Sauerstoff steuern den Einlaß der Gaskomponenten in die Mischkammer 15. Die Vermischung der Gaskomponenten erfolgt in einer Bohrung 18 der Mischkammer 15.

Durch die Gaseinstoßzylinder 14 wird das BrenngasSauerstoff-Gemisch von der Mischkammer 15 über die Gasstaustufe 19 in dit Werkstück-Bearbeitungskammer 6 gedrückt und bis auf ca. 40 bar komprimiert.

Die Gasstaustufe 19 besteht aus einer Anzahl von labyrinthartig verlaufenden Bohrungen 20 bis 24. Diese Bohrungen sind Dorzugsweise rechtwinklig zueinander angeordnet. Es ist jedoch auch eine schräge Anordnung der Bohrungen zueinander möglich. Die Gasstaustufe 19 ist mit der Mischkammer 15 über eine Gaseintrittsbohrung 20 und mit der Werkstück-Bearbeitungskammer 6 über eine Gasaustrittsbohrung 25 verbunden. Im übrigen sind die Bohrungen durch Stopfen 60 gasdicht verschlossen.

Die labyrinthartigen Bohrungen 20 bis 24 in der Gasstaustufe 19 sind derart angeordnet, daß sich nach jeder Bohrungskreuzung ein Sackloch 26 befindet.

Die Gasstaustufe 19 arbeitet wie folgt : Nachdem das Brenngas-Sauerstoff-Gemisch sich unter entsprechendem in der Werkstück-Bearbeitungskammer 6 befindet wird mittels der Zündkerze 27 im Mischblock 15 das Gemisch gezündet. Die Flammenfront schreitet dann über die Bohrung 20 durch die labyrinthartigen Bohrungen 21 bis 24 der Gasstaustufe 19 zur Werkstück-Bearbeitungskammer 6 fort. Bei der Explosion treten in der Kammer ein Druck bis zu 700 bar und Temperaturen in der Größenordnung vom 3500° C auf. Beim Entgraten des Werkstücks 7 entstehen durch das Verbrennen der Grate erhebliche Verbrennungsrückstände, die durch die rückschlagende Druckwelle als Verunreinigungen in die Gasstaustufe 19 gedrückt werden. Durch die labyrinthartige Ausbildung der Gasstaustufe 19 mit einer Anzahl von rechtwinklig zueinander verlaufenden Bohrungen und Sacklöchern 26 werden die Verunreinigungen aus der Brennkammer 10 aufgehalten und gelangen nicht in die Mischkammer 15. Hierdurch wird erreicht, daß mindestens eine Verzehnfachung der Standzeiten der Zündkerze 27 eintritt. Somit werden Fehlzündungen in der Anlage, die taktweise betrieben wird, vermieden. Die Betriebssicherheit der Anlage wird damit wesentlich erhöht.

Im Gegensatz zu der vorstehend beschriebenen bekannten Anlage zum thermischen Entgraten sind bei der vorgeschlagenen Anlage nach Figur 2 dit Werkstück-Bearbeitungskammer, die Gas-Mischkammer und die Gasstaustufe in einem einzigen Block 30 untergebracht, der zylindrische Form aufweist. Im Innern des Blocks ist die Werkstück-Bearbeitungskammer 31 ausgebildet. Diese nach unten hin offene Kammer ist durch einen in Richtung des Doppelpfeils 32 bewegbaren Teller 33 gasdicht verschließbar ; der Teller 33 trägt das zu entgratende, nicht dargestellte Werkstück. In einer ringförmigen Nut 34 des Tellers 33 sitzt eine Dichtung 35, die im geschlossenen Zustand der Kammer an der Stirnfläche 36 des Blocks 30 anliegt.

Die Werkstück-Bearbeitungskammer 31 dient zugleich als Gas-Mischkammer. Die Zuführung der Gaskomponenten erfolgt hierbei über zwei Leitungen 37, 38, die in die Kammer 31 münden und im Ausführungsbeispiel als Sachlochbohrungen 39, 40 bzw. 41, 42 im Oberteil 43 des Blocks 30 ausgebildet sind. Die Bohrungen 39, 40 sind rechtwinklig zueinander angeordnet, während die Bohrung 41 parallel zur Bohrung 39 und die Bohrung 42 schräg zur Bohrung 40 verläuft, derart, daß die Bohrungen 40, 42 dicht nebeneinander in dit Kammer 31 münden. Die Sauerstoff führende Bohrung 39 findet ihre Fortsetzung in einer Bohrung 44, während sich an die das Brenngas enthaltende Bohrung 41 eine Bohrung 45 anschließt. Dit Bohrungen 44, 45 sind in einem Block 48 ausgebildet, in dem auch die den Gaseinlaß steuernden Ventile untergebracht sein können.

Die gleichfalls im Oberteil 43 des Blocks 30 untergebrachte Gasstaustufe 47 besteht aus einem Leitungssystem 48. Die Leitungen sind dabei als rechtwinklig zueinander angeordnete Sachlochbohrungen 49, 50, 51 ausgebildet. Die beiden parallel zueinander verlaufenden Vertikalbohrungen 49, 50 münden in die Werkstückaufnahmekammer 31 und können, wie aus Figur 2 ersichtlich ist, unterschiedliche Durchmesser haben. Die Bohrung 51 verläuft horizontal und verbindet die Bohrungen 49, 50 miteinander. Die Bohrung 51 ist an ihrem zur Außenseite des Blocks 30 weisenden Ende mit einer Erweiterung 52 versehen, in die eine Gewindebuchse 53 zur Aufnahme einer Zündkerze 54 eingesetzt ist.

Die Bohrungen 49, 50, 51 der Gasstaustufe sind derart angeordnet, daß sich nach jeder Bohrungskreuzung ein Sackloch 55 befindet. In diesen Sacklöchern 55 fangen sich die Verunreinigungen, die beim Entgratvorgang in der Werkstückaufnahmekammer 31 entstehen und werden dadurch von der Zündkerze 54 ferngehalten. Die Wirkung der Gasstaustufe 47 entspricht somit derjenigen der bekannten Anlage nach Figur 1, mit dem Unterschied, daß dort die Gasstaustufe in einem besonderen Block untergebracht ist, während bei der vorgeschlagenen Anordnung die Gasstaustufe 47 in den Werkstückaufnahme- und Gasmischblock 30 integriert ist, was sich auf die Herstellungskosten und den Raumbedarf der Anlage günstig auswirkt.

Außerdem können die labyrinthartig verlaufenden Bohrungen relativ klein gehalten werden, so daß die thermische Belastung der Zündkerze gering ist. Durch relativ kleine Bohrungen in der Größenordnung zwischen 1 mm und 8 mm wird gleichzeitig das Eindringen von Verschmutzungspartikeln erschwert.

Die Anlage, wie sie in Figur 2 dargestellt ist, eignet sich nicht nur zum thermischen Entgraten von Werkstücken, sondern ist ebenso für weitere Anwendungsgebiete geeignet. So kann mit einer derartigen Anlage das Verfahren des Retikulierens von Schaumstoff nach DE-Patent 15 04 096 oder das Verfahren zum Entfernen von porösen Formen z. B. nach DE-Patent 23 22 760 durchgeführt werden.

## Patentansprüche

1. Anlage zur Behandlung von Werkstücken mit einem explosiven Gasgemisch, insbesondere thermische Entgratanlage, die eine Werkstück-Bearbeitungskammer sowie eine zwischen der Werkstück-Bearbeitungskammer und einer Zündvorrichtung angeordnete Gasstaustufe mit labyrinth- oder mäanderförmig verlaufenden Leitungen hat, dadurch gekennzeichnet, daß die unmittelbar in die Werkstück-Bearbeitungskammer mündenden Zuleitungen (37, 38) für die Gaskomponenten und das Leitungssystem (48) der Gasstaustufe (47) als Bohrungen (39 bis 42 bzw. 49, 50, 51) im Kammerblock (30), vorzugsweise in dessen Oberteil (43), ausgebildet sind, und daß die Gasstaustufe mehrere, in die Werkstück-Bearbeitungskammer mündende parallel zueinander angeordnete Bohrungen (49, 50) hat, welche durch mindestens eine Querbohrung (51) miteinander verbunden sind.

2. Anlage nach Anspruch 1, dadurch gekennzeichnet, daß die Querbohrung (51) nach außen geführt und mit einer Aufnahme (53) für die Zündvorrichtung (54) versehen ist.

3. Anlage nach Anspruch 1 oder 2, dadurch gekennzeichnet, daß die Gaszuleitungsbohrungen (39 bis 42) und die Bohrungen (49, 50, 51) der Gasstaustufe (47) als Sacklochbohrungen ausgeführt sind.

## Claims

1. Apparatus for the handling of workpieces with an explosive gas mixture, in particular thermal deburring apparatus, which has a workpiece machining chamber and a gas retention stage arranged between the workpiece machine chamber and an ignition device with lines running in labyrinth or meander shape, characterized in that the supply lines (37, 38) for the gas components, opening out directly into the workpiece machining chamber, and the line system (48) of the gas retention stage (47) are designed as bore holes (39 to 42 and 49, 50, 51, respectively) in the chamber block (30), preferably in the upper part (43) of the latter, and in that the gas retention stage has several bore holes (49, 50), which open out into the workpiece machining chamber, are arranged parallel to one another and are interconnected by means of at least one cross bore hole (51).

2. Apparatus according to Claim 1, characterized in that the cross bore hole (51) is led to the outside and is provided with a receptacle (53) for the ignition device (54).

3. Apparatus according to Claim 1 or 2, characterized in that the gas supply line bore holes (39 to 42) and the bore holes (49, 50, 51) of the gas retention stage (47) are designed as blind bore holes.

## Revendications

1. Installation pour le traitement de pièces d'œuvre, avec un mélange de gaz explosif, notamment installation d'ébavurage thermique, cette installation comportant une chambre de traitement de la pièce d'œuvre ainsi qu'un étage d'accumulation des gaz, comportant des canalisations en forme de labyrinthes ou de méandres, disposées entre cette chambre de traitement de la pièce d'œuvre et un dispositif d'allumage, installation caractérisée en ce que les canalisations d'alimentation (37, 38) pour les composants gazeux, débouchant directement dans la chambre de traitement de la pièce d'œuvre, ainsi que le système de canalisation (48) de l'étage d'accumulation des gaz (47) sont réalisés sous la forme de perçages (39 à 42 ou bien 49, 50, 51) dans le bloc (30) de la chambre et, de préférence, dans la partie supérieure (43) de ce bloc, et que l'étage d'accumulation des gaz comporte plusieurs perçages (49, 50) disposés parallèlement les uns aux autres et débouchant dans la chambre de traitement de la pièce d'œuvre, ces perçages étant reliés entre eux par au moins un perçage transversal (51).

2. Installation selon la revendication 1, caractérisé en ce que le perçage transversal (51) conduit vers l'extérieur et est muni d'un logement (53) pour le dispositif d'allumage (54).

3. Installation selon la revendication 1 ou 2, caractérisée en ce que les perçages d'alimentation en gaz (39 à 42) et les perçages (49, 50, 51) de l'étage d'accumulation des gaz (47) revêtent la forme de perçages borgnes.

Fig. 1

# Fig. 2